# EUROPÄISCHE PATENTSCHRIFT

(11) **EP 4 323 665 B1**
(45) Veröffentlichungstag und Bekanntmachung des Hinweises auf die Patenterteilung: **29.10.2025**
(21) Anmeldenummer: 22715112.3
(22) Anmeldetag: 30.03.2022
(51) Int. Cl.: F16D 3/04, F16D 3/50

(54) **ANTRIEB, AUFWEISEND EINEN ELEKTROMOTOR, EIN GETRIEBE UND EIN ZWISCHEN ELEKTROMOTOR UND GETRIEBE ANGEORDNETES ADAPTERGEHÄUSE**
DRIVE HAVING AN ELECTRIC MOTOR, A GEARBOX AND AN ADAPTER HOUSING ARRANGED BETWEEN THE ELECTRIC MOTOR AND THE GEARBOX
ENTRAÎNEMENT COMPRENANT UN MOTEUR ÉLECTRIQUE, UNE BOÎTE DE VITESSES ET UN BOÎTIER ADAPTATEUR DISPOSÉ ENTRE LE MOTEUR ÉLECTRIQUE ET LA BOÎTE DE VITESSES

(30) Priorität: 12.04.2021 DE 102021001859
(43) Veröffentlichungstag der Anmeldung: 21.02.2024
(73) Patentinhaber: SEW-EURODRIVE GmbH & Co. KG, 76646 Bruchsal (DE)
(72) Erfinder: BÜHN, Oliver, 76703 Kraichtal (DE); KERSCHBAUM, Martin, 76139 Karlsruhe (DE); TEGELTIJA, Miki, 76689 Karlsdorf-Neuthardt (DE)
(86) Internationale Anmeldenummer: PCT/EP2022/058386
(87) Internationale Veröffentlichungsnummer: WO 2022/218703

(56) Entgegenhaltungen:
- EP-A1- 3 791 091
- EP-B1- 3 791 091
- JP-A- 2008 167 585
- US-A1- 2013 039 696

## Beschreibung

Die Erfindung betrifft einen Antrieb, aufweisend einen Elektromotor, ein Getriebe und ein zwischen Elektromotor und Getriebe angeordnetes Adaptergehäuse.

Es ist allgemein bekannt, dass ein Getriebe von einem Elektromotor antreibbar ist und somit ein Antrieb bereit stellbar ist.

Aus der DE 10 2018 000 963 A1 ist ist ein Antrieb bekannt.

Aus der DE 691 23 720 T2 ist eine Wellenkupplung bekannt.

Aus der DE 600 23 798 T2 ist eine Kraftübertragungskupplung bekannt.

Aus der JP 2003- 091 208 A ist eine Antriebseinheit für einen Photoempfänger bekannt.

**Aus der** JP 2008 167585 A **ist als nächstliegender Stand der Technik ein Antrieb bekannt, der ein Getriebe und ein das Getriebe antreibenden Elektromotor aufweist.**

**Aus der** EP 3 791 091 A1 **ist ein modular aufgebauter Antrieb bekannt.**

**Aus der** US 2013/039696 A1 **ist eine Wellenkupplung bekannt.**

Der Erfindung liegt daher die Aufgabe zugrunde, einen Antrieb weiterzubilden, wobei Geräuschemissionen verringert sein sollen.

Erfindungsgemäß wird die Aufgabe bei dem Antrieb nach den in Anspruch 1 angegebenen Merkmalen gelöst.

Wichtige Merkmale der Erfindung bei dem Antrieb, dass der Antrieb einen Elektromotor, ein Getriebe und ein zwischen Elektromotor und Getriebe angeordnetes Adaptergehäuse aufweist,
wobei die Rotorwelle des Elektromotors mit einem ersten Kupplungsteil verbunden ist, welches auf eine Nut aufweist, in welche ein Federbereich einer eintreibenden Welle des Getriebes hineinragt,
wobei zwischen dem ersten Kupplungsteil und der eintreibenden Welle, insbesondere zwischen dem ersten Kupplungsteil und dem Federbereich der eintreibenden Welle, ein Zwischenteil angeordnet ist.

Von Vorteil ist dabei, dass ein Zwischenteil zwischen dem Motor und dem Getriebe angeordnet ist und somit nicht nur eine Kupplungsfunktion, sondern auch eine Verminderung der Geräuschemissionen erreichbar ist. Denn durch entsprechende Materialpaarung des Materials des Zwischenteils mit dem Material der eintreibenden Welle und des ersten Kupplungsteils werden axiale und auch radiale Schwingungsmoden an ihrer Ausbreitung vom Motor zum Getriebe oder umgekehrt verhindert. Dadurch werden Geräuschemissionen verringert.

Bei einer vorteilhaften Ausgestaltung ist das Zwischenteil aus einem weicheren Material als die eintreibende Welle und als das erste Kupplungsteil ausgeführt,
insbesondere wobei das Zwischenteil aus Kunststoff und die eintreibende Welle aus Metall, insbesondere Stahl, sowie das erste Kupplungsteil aus Metall, insbesondere Stahl, ausgeführt ist. Von Vorteil ist dabei, dass Schwingungsmoden abgedämpft werden und somit Geräuschemissionen verringert werden.

Bei einer vorteilhaften Ausgestaltung ragt der Federbereich in axialer Richtung an dem dem Motor zugewandten axialen Endbereich der eintreibenden Welle hervor. Von Vorteil ist dabei, dass das Zwischenteil aufsteckbar ist auf den Federbereich, so dass dieser in einen Aufnahmebereich des Zwischenteils hineinragt, der begrenzt ist durch Wände, Flügelbereiche und Anschlagsbereiche. Somit ist der Federbereich mit dem Zwischenteil quer zur axialen Richtung formschlüssig verbindbar.

Bei einer vorteilhaften Ausgestaltung erstreckt sich der Federbereich in einer zur Drehachse der eintreibenden Welle senkrechten Richtung, insbesondere also in einer radialen Richtung. Von Vorteil ist dabei, dass der Federbereich in einer zur axialen Richtung ausgerichtete Querrichtung weiter ausgedehnt ist als in axialer Richtung oder in einer zu dieser Querrichtung senkrechten Richtung. Somit ist ein hohes Drehmoment vom Federbereich auf das erste Kupplungsteil übertragbar, da der Federbereich in die entsprechend ausgeformte Nut des ersten Kupplungsteils hineinragt.

Bei einer vorteilhaften Ausgestaltung erstreckt sich die Nut sich in einer zur Drehachse der eintreibenden Welle senkrechten Richtung, insbesondere also in einer radialen Richtung. Von Vorteil ist dabei, dass die Nut in der Querrichtung weiter ausgedehnt ist als in axialer Richtung oder einer anderen zur Querrichtung senkrechten Richtung. Somit ist eine drehfeste Verbindung zwischen erstem Kupplungsteil und eintreibender Welle ermöglicht, die sogar spielfrei ist infolge des zwischengeordneten Zwischenteils und somit weniger Geräuschemissionen bewirkt.

Bei einer vorteilhaften Ausgestaltung ist die Nut, insbesondere die Nutöffnung der Nut, zur eintreibenden Welle hin geöffnet. Von Vorteil ist dabei, dass der Federbereich hineinragen kann und somit eine drehfeste Verbindung zwischen dem ersten Kupplungsteil und der eintreibenden Welle des Getriebes erreichbar ist.

Bei einer vorteilhaften Ausgestaltung ist die Nut in einen, insbesondere ansonsten, hohlzylindrischen Fortsatz des ersten Kupplungsteils, insbesondere ansonsten ebenfalls hohlzylindrischen ersten Kupplungsteils, eingebracht. Von Vorteil ist dabei, dass Luft beim Einstecken der Rotorwelle entweichen kann und das Zwischenteil auf den Fortsatz aufsteckbar ist.

Bei einer vorteilhaften Ausgestaltung ist die Nut in ein, insbesondere ansonsten, hohlzylindrisches erstes Kupplungsteil eingebracht. Von Vorteil ist dabei, dass Luft beim Einstecken der Rotorwelle in das erste Kupplungsteil entweichen kann und eine kompakte Lösung erreichbar ist.

Erfindungsgemäß ist die Nut zwischen zwei Klauenbereichen des ersten Kupplungsteils angeordnet. Von Vorteil ist dabei, dass eine einfache Herstellung durch Einbringen einer Nut mit rechteckförmigem oder quadratischem Nutquerschnitt ermöglicht ist.

ERfindungsgemäß ist die Nut berandet ist von zwei Klauenbereichen des ersten Kupplungsteils, insbesondere wobei die Nut zwischen den beiden Klauenbereichen angeordnet. Von Vorteil ist dabei, dass eine einfache Herstellung ermöglicht ist, insbesondere durch Einbringen einer Nut mit rechteckförmigem oder quadratischem Nutquerschnitt.

Bei einer vorteilhaften Ausgestaltung ist jeder der beiden Klauenbereiche als Zylindersegment ausgeführt. Von Vorteil ist dabei, dass durch Einbringen der Nut in den Hohlzylinder sich diese Form des Klauenbereichs sofort ergibt, insbesondere wenn die Nutbreite den Durchmesser der axialen Bohrung des ersten Kupplungsteils übertrifft.

Erfindungsgemäß weist das erste Kupplungsteil zwischen den Klauenbereichen und dem restlichen ersten Kupplungsteil einen Wellenabsatz, insbesondere also Durchmessersprung, auf. Von Vorteil ist dabei, dass die Schnittstelle zum Getriebe hin unverändert bleibt und nur ein Absatz am ersten Kupplungsteil vorgesehen werden muss, um eine Rotorwelle mit größerem Durchmesser zu verbinden.

Bei einer vorteilhaften Ausgestaltung ist das erste Kupplungsteil kraftschlüssig, insbesondere thermisch aufgeschrumpft, mit der Rotorwelle des Elektromotors verbunden,
insbesondere wobei die Rotorwelle in den axial durchgehenden Hohlraum des ersten Kupplungsteils hineinragt. Von Vorteil ist dabei, dass eine einfache und kostengünstige Verbindung zur Übertragung eines hohen Drehmoments erreichbar ist.

Bei einer vorteilhaften Ausgestaltung weist das Adaptergehäuse in dem vom ersten Kupplungsteil in axialer Richtung überdeckten Bereich nach radial innen hervorragende Laschenbereiche auf, welche jeweils zwei radial, insbesondere und in Umfangsrichtung, voneinander beabstandete, axial durch die Laschenbereich durchgehende Bohrungen aufweisen, insbesondere für durch die radial weiter innen oder radial weiter außen liegenden Bohrungen hindurchreichenden Schrauben, deren jeweilige Gewindebereiche in jeweilige Gewindebohrungen des Elektromotors, insbesondere in Gewindebohrungen eines Lagerflansches des Elektromotors, eingeschraubt sind. Von Vorteil ist dabei, dass verschieden große Motoren mit dem Adaptergehäuse verbindbar sind und entsprechend verschieden große Rotorwellen mit entsprechenden ersten Kupplungsteilen mit dem immer gleichen Zwischenteil und Federbereich der eintreibenden Welle verbindbar ist.

Bei einer vorteilhaften Ausgestaltung ist das Adaptergehäuse mittels in axial gerichtete, im Getriebe angeordnete Gewindebohrungen eingeschraubten Schrauben ans Getriebe angeschraubt. Von Vorteil ist dabei, dass eine einfache, aber stabile Verbindung ermöglicht ist.

Erfindungsgemäß weist das Zwischenteil Anschlagsbereiche, insbesondere stegförmige Anschlagsbereiche, auf, welche jeweils einen ersten Flügelbereich und einen zweiten, insbesondere unteren, Flügelbereich verbinden und am Nutboden der Nut anliegen. Von Vorteil ist dabei, dass eine erhöhte Stabilität für das Zwischenteil erreichbar ist. Außerdem liegt das Zwischenteil mittels der Anschlagsbereiche am ersten Kupplungsteil an, insbesondere am Nutboden der am ersten Kupplungsteil eingebrachten Nut.

Erfindungsgemäß ist ein erster Wandbereich mit dem ersten Flügelbereich und dem zweiten Flügelbereich verbunden,
wobei der erste Wandbereich eben ausgeführt ist und ein erster Anschlagsbereich eben ausgeführt ist, wobei der Wandbereich senkrecht zum ersten Anschlagsbereich ausgerichtete ist, insbesondere die Richtung der Normalen der den ersten Wandbereich aufnehmenden Ebene senkrecht zur Richtung der Normalen der den ersten Anschlagsbereich aufnehmenden Ebene ausgerichtet ist. Von Vorteil ist dabei, dass eine erhöhte Stabilität und Steifigkeit am Zwischenteil erreichbar ist.

Bei einer vorteilhaften Ausgestaltung ist ein zweiter Wandbereich mit dem ersten Flügelbereich und dem zweiten Flügelbereich verbunden,
wobei der zweite Wandbereich eben ausgeführt ist und ein zweiter Anschlagsbereich eben ausgeführt ist, wobei der Wandbereich senkrecht zum zweiten Anschlagsbereich ausgerichtet ist, insbesondere die Richtung der Normalen der den zweiten Wandbereich aufnehmenden Ebene senkrecht zur Richtung der Normalen der den zweiten Anschlagsbereich aufnehmenden Ebene ausgerichtet ist. Von Vorteil ist dabei, dass eine erhöhte Stabilität und Steifigkeit am Zwischenteil erreichbar ist.

Erfindungsgemäß ist ein erster Laschenbereich mit dem ersten Flügelbereich und mit dem zweiten Flügelbereich sowie mit dem ersten Wandbereich verbunden,
wobei der erste Laschenbereich eben ausgeführt ist und parallel zum ersten Anschlagsbereich eben ausgeführt ist. Von Vorteil ist dabei, dass eine Fehlmontage des Zwischenteils vermeidbar ist und die Steifigkeit des Zwischenteils erhöhbar ist.

Bei einer vorteilhaften Ausgestaltung ist ein zweiter Laschenbereich mit dem ersten Flügelbereich und mit dem zweiten Flügelbereich sowie mit dem zweiten Wandbereich verbunden,
wobei der zweite Laschenbereich eben ausgeführt ist und parallel zum ersten und/oder zweiten Anschlagsbereich eben ausgeführt ist. Von Vorteil ist dabei, dass eine Fehlmontage des Zwischenteils vermeidbar ist und die Steifigkeit des Zwischenteils erhöhbar ist.

Bei einer vorteilhaften Ausgestaltung berührt der Federbereich der eintreibenden Welle den ersten und zweiten Anschlagsbereich auf dessen von dem Elektromotor abgewandter Seite und das erste Kupplungsteil, insbesondere der Nutboden der Nut, berührt den ersten und zweiten Anschlagsbereich auf der vom Federbereich abgewandten Seite des Anschlagsbereichs. Von Vorteil ist dabei, dass das Zwischenteil aufsteckbar ist auf die eintreibende Welle, insbesondere auf den axial hervorragenden Federbereich der eintreibenden Welle.

Bei einer vorteilhaften Ausgestaltung ist das Zwischenteil in der Richtung der größten Ausdehnung des Federbereichs länger als der Federbereich ausgeführt, insbesondere so dass das Zwischenteil bei entferntem erstem Kupplungsteil relativ zum Federbereich hin- und herbewegbar ist. Von Vorteil ist dabei, dass Getriebe mit verschieden großen eintreibenden Wellen verwendbar sind, die aber einen jeweils gleich breiten Federbereich aufweisen und sich nur in der längsten Ausdehnung des jeweiligen Feuerbereichs in zur axialen Richtung senkrechten Richtung unterscheiden.

Bei einer vorteilhaften Ausgestaltung liegt der erste Laschenbereich an einer axialen Stirnseite der eintreibenden Welle an, insbesondere spielbehaftet angrenzt. Von Vorteil ist dabei, dass ein stabiles und somit geräuscharmes Verbinden der eintreibenden Welle mit dem Zwischenteil ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein **erster** erfindungsgemäßer Getriebemotor mit einem zwischen dem Elektromotor 3 und dem Getriebegehäuse 1 zwischengeordneten Adapter mit Adaptergehäuse 2 in Schrägansicht dargestellt.

In der Figur 2 ist eine explodierte Schrägansicht des Getriebemotors dargestellt, wobei ein Zwischenteil 22 und ein Kupplungsteil 25 erkennbar sind.

In der Figur 3 ist die explodierte Schrägansicht aus einem anderen Blickwinkel dargestellt.

In der Figur 4 ist das Adaptergehäuse 2 in Draufsicht dargestellt.

In der Figur 5 ist die eintreibende Welle 20 des Getriebes, das Zwischenteil 22 und das Kupplungsteil 25 in Schrägansicht dargestellt.

In der Figur 6 ist die Kombination gemäß Figur 5 aus einem anderen Blickwinkel dargestellt.

In der Figur 7 ist die Kombination zusammengebaut in Schrägansicht dargestellt.

In der Figur 8 ist die Kombination in Seitenansicht dargestellt.

In der Figur 9 ist das Zwischenteil 22 in Schrägansicht dargestellt.

In der Figur 10 ist das Zwischenteil 22 aus einem anderen Blickwinkel in Schrägansicht dargestellt.

In der Figur 11 ist ein **zweiter** erfindungsgemäßer Getriebemotor in Seitenansicht dargestellt, wobei ein zweites Kupplungsteil 120 innerhalb des Adaptergehäuses 2 angeordnet ist.

In der Figur 12 ist eine explodierte Darstellung des zweiten Getriebemotors gezeigt.

In der Figur 13 ist die Darstellung aus einem anderen Blickwinkel gezeigt.

In der Figur 14 ist eine zweite Kombination aus eintreibender Welle 20, Zwischenteil 22 und zweitem Kupplungsteil 120 in Schrägansicht dargestellt.

In der Figur 15 ist diese zweite Kombination aus einem anderen Blickwinkel dargestellt.

In der Figur 16 ist die zweite Kombination zusammengebaut dargestellt.

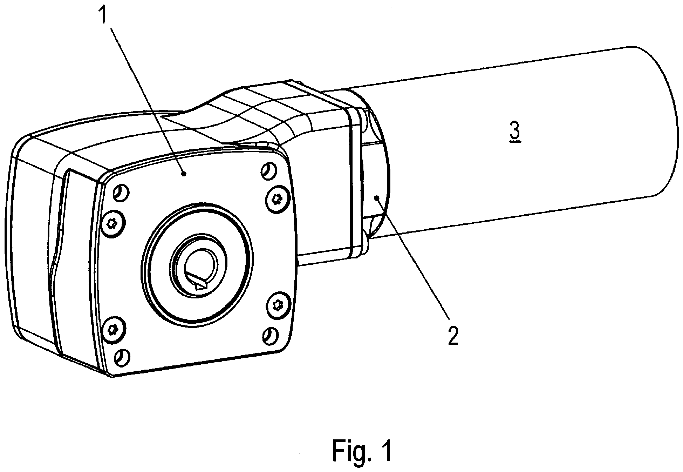

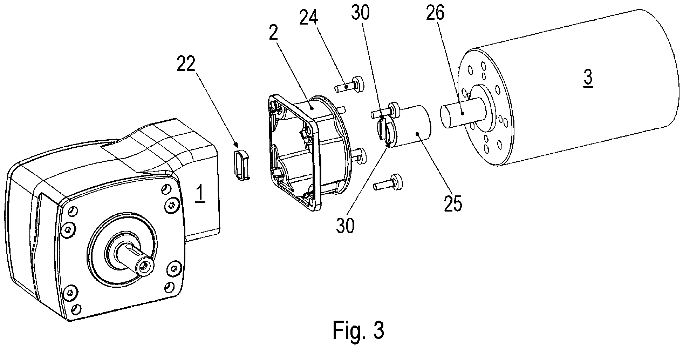

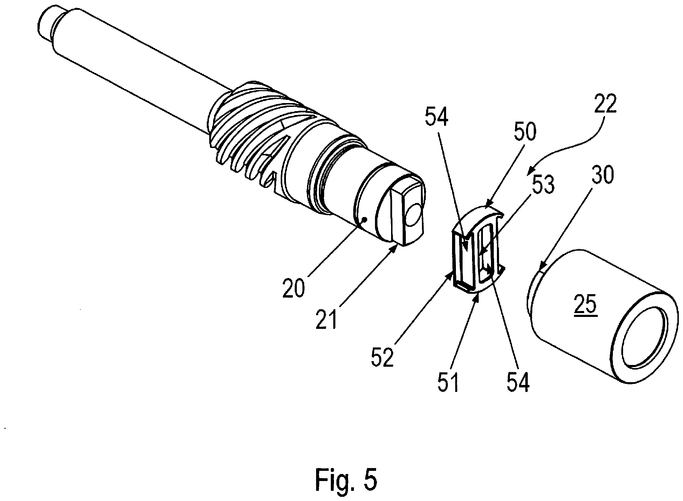

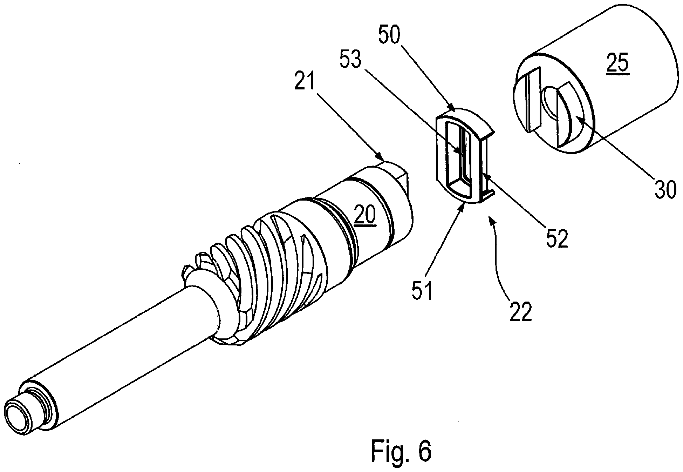

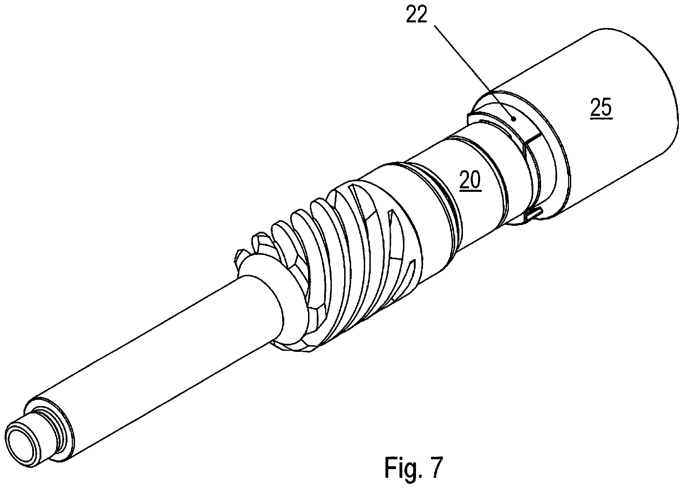

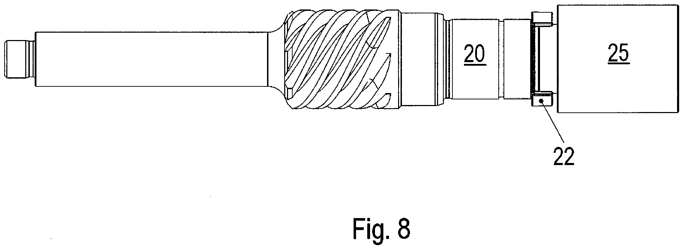

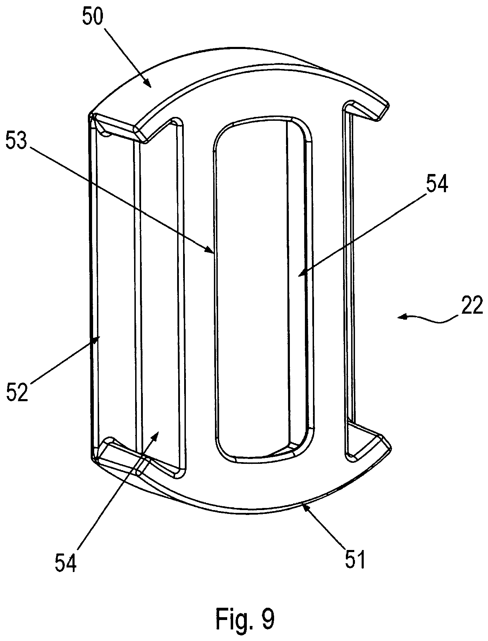

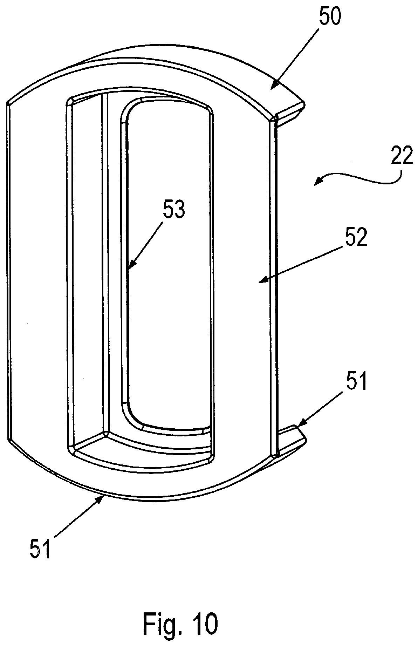

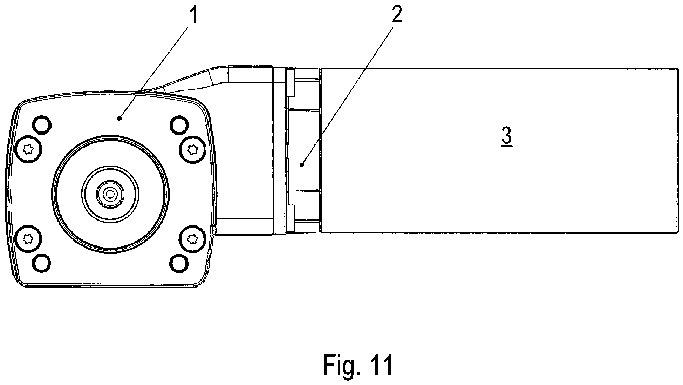

Wie in den Figuren 1 bis 11 dargestellt, sind im Getriebegehäuse 1 Lager aufgenommen, welche die eintreibende Welle 20 des Getriebes drehbar lagern.

Die eintreibende Welle 20 weist eine Verzahnung, insbesondere Ritzelverzahnung, auf, welche mit einem weiteren Verzahnungsteil des Getriebes im Eingriff ist.

An ihrem dem Elektromotor 3 zugewandten Endbereich weist die eintreibende Welle 20 einen Federbereich 21 auf. Der Federbereich 21 erstreckt sich in radialer Richtung. Mittig im Federbereich 21 ist ein axial gerichtetes Bohrloch in die eintreibende Welle 20 eingebracht, dessen Bohrungsachse koaxial zur Drehachse der eintreibenden Welle ausgerichtet ist.

Auf die Rotorwelle 25 des Elektromotors 3 ist ein erstes Kupplungsteil 25 aufgesteckt. Hierzu ist das erste Kupplungsteil mit einer in axialer Richtung, also in Richtung der Drehachse der eintreibenden Welle 20 des Getriebes, durchgehenden Ausnehmung ausgeführt. Somit ist ein Entweichen von Luft beim Aufstecken des Kupplungsteils 25 auf die Rotorwelle 26 ermöglicht.

Der Federbereich 21 der eintreibenden Welle 20 ragt in eine sich radial erstreckende Nut des ersten Kupplungsteils 25 hinein, die zwischen zwei zum Getriebe hin hervorragenden Klauenbereichen 30 angeordnet ist. Dabei sind die beiden Klauenbereiche 30 durch das Einbringen der radial sich erstreckenden Nut in einen koaxial zur Drehachse des ersten Kupplungsteils 25 ausgerichteten zylindrischen Bereich des ersten Kupplungsteils erzeugt. Daher ist der radial äußere Umfang der beiden Klauenbereiche 30 zylindrisch geformt.

Mittig im ersten Kupplungsteil 25 ist zwischen den Klauenbereichen 30 eine Axialbohrung eingebracht, so dass die beim Aufstecken des ersten Kuppplungsteils 25 auf die Welle verdrängte Luft entweichen kann.

Auf den Federbereich 21 ist das Zwischenteil 22 aufgesteckt. Somit ist das Zwischenteil 22 axial zwischengeordnet zwischen die eintreibende Welle 20 und das erste Kupplungsteil 25. Vorzugsweise ist das Zwischenteil 22 aus einem weicheren Material gefertigt als das erste Kupplungsteil 25 und auch als die eintreibende Welle 20. Insbesondere ist das Zwischenteil 22 aus Kunststoff gefertigt und die eintreibende Welle 20 aus Stahl sowie das erste Kupplungsteil 25.

Somit sind axial durchgehende Schwingungsmoden abgedämpft.

Das erste Kupplungsteil 25 ist vorzugsweise kraftschlüssig mit der Rotorwelle 26 verbunden.

Am dem Adaptergehäuse 2 zugewandten Lagerflansch des Elektromotors sind Axialbohrungen eingebracht, in welche durch das Adaptergehäuse 2 durchgehende Schrauben 23 einschraubbar sind, so dass das Adaptergehäuse mit dem Gehäuse, insbesondere Lagerflansch, des Elektromotors verbindbar ist.

Weitere Schrauben 24 ragen durch das Adaptergehäuse 2 durch und sind in Axialbohrungen, insbesondere Gewindebohrungen, des Getriebes eingeschraubt.

Die Klauenbereiche 30 ragen am ersten Kupplungsteil 25 zum Getriebe hin hervor.

Am Adaptergehäuse 2 sind nach radial innen hervorragende Laschenbereiche 40 ausgeformt, durch welche die Schrauben 24 hindurchragen, wobei der jeweilige Schraubenkopf auf der zum Getriebe hin gewandten Seite angeordnet ist und der Gewindebereich der jeweiligen Schraube in eine jeweilige Axialbohrung des Lagerflansches eingeschraubt ist.

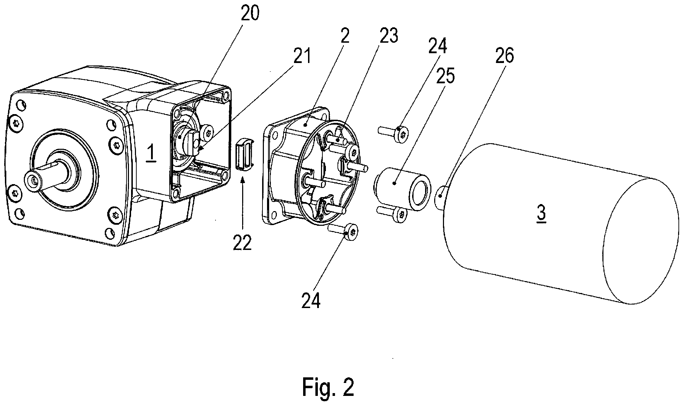

In der Figur 2 ist das Adaptergehäuse 2 mit schematisch angedeuteten nach radial innen hervorragenden Laschenbereichen dargestellt, durch welche die Schrauben 23 hindurchragen zum Einschrauben ihres Gewindebereichs in axial gerichtete Gewindebohrungen des Elektromotors 3, insbesondere des zum Getriebe zugewandten Lagerflansches des Elektromotors 3.

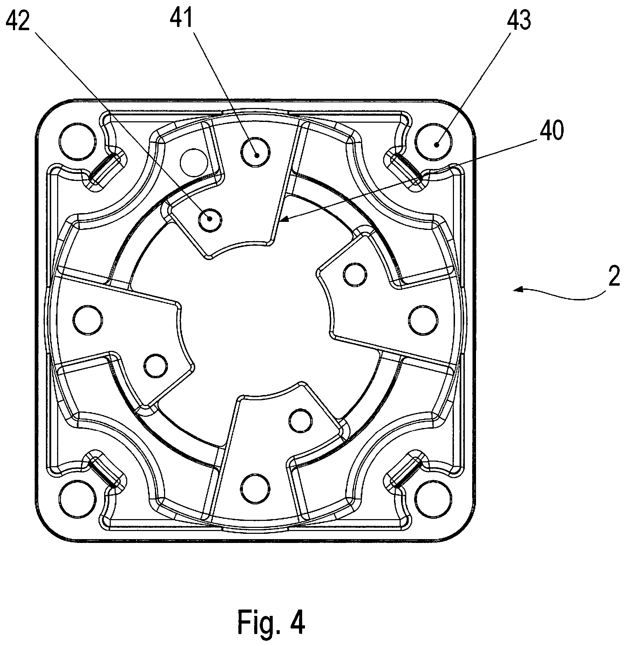

In der Figur 4 ist das Adaptergehäuse 2 mit konkret ausgeführten Laschenbereichen 40 dargestellt, welche jeweils zwei axial durchgehende Löcher aufweisen, wobei diese beiden Löcher radial und in Umfangsrichtung voneinander beabstandet sind. Somit ist die durch den jeweiligen Laschenbereich 40 durchgeführte Schraube 23 auf verschiedenen Radialabständen anordenbar, nämlich abhängig von der Größe des Elektromotors, dessen Lochbild entsprechend auf einem kleineren oder größeren Radialabstand angeordnet ist. Die radial weiter innen liegenden axial durchgehenden Löcher 42 sind für einen kleineren Motor vorgesehen und die auf im Vergleich zu den Löchern 42 radial weiter außenliegenden Löcher sind für den größeren Motor vorgesehen.

Das Zwischenteil 22 ist derart geformt, insbesondere als Kunststoffspritzgussteil, dass ein Anschlagsbereich 53 nach dem Aufstecken des Zwischenteils 22 auf den Federbereich 21 der eintreibenden Welle 20 an der axialen Stirnfläche des Federbereichs 21 anliegt, insbesondere anschlägt.

Der Anschlagsbereich 53 ist am dem ersten Kupplungsteil 25 zugewandten Endbereich des Zwischenteils 22 angeordnet. Der Anschlagsbereich berührt den Federbereich 21 in Umfangsrichtung ununterbrochen.

Im Anschlagsbereich 53 ist eine als Langloch ausgeführte, axial durch das Zwischenteil 22 durchgehende Ausnehmung angeordnet, welche vom Anschlagsbereich 53 berandet ist.

Beim Aufstecken des ersten Kupplungsteils 25 auf die Rotorwelle 26 ist somit ein Entweichen von verdrängter Luft aus dem ersten Kupplungsteil 25 zwischen den Klauenbereichen 30 durch das Zwischenteil 22 hindurch ermöglicht, wenn das Zwischenteil 22 vor dem Einstecken des Federbereichs 21 ins Zwischenteil 22 schon auf dem ersten Kupplungsteil 25 aufgesteckt ist.

Die Klauenbereiche 30 sind einem Zylinderabschnitt entsprechend geformt und sind vom Zwischenteil 22 aufgenommen. Insbesondere sind Eckbereiche der Zylinderabschnitte spielfrei anliegend am Zwischenteil 22, so dass das Zwischenteil in Umfangsrichtung und radialer Richtung formschlüssig mit dem ersten Kupplungsteil 25, insbesondere mit den Klauenbereichen 30 des ersten Kupplungsteils 25, verbunden sind. Somit ist das Zwischenteil 22 zum ersten Kupplungsteil 25 nur in axialer Richtung nicht aber in radialer Richtung verschiebbar und nicht in Umfangsrichtung drehbar.

An dem vom ersten Kupplungsteil 25 in axialer Richtung abgewandten Endbereich des Zwischenteils 22 sind am Zwischenteil 22 Laschenbereiche 52 ausgebildet, welche an dem nicht durch den axial an der eintreibendenden Welle 20 zum ersten Kupplungsteil 25 axial hervorragenden Federbereich 21 bedeckten Bereich der Stirnseite der eintreibenden Welle 20 anliegen oder lose anliegen.

Der Federbereich 21 ist zwar im Zwischenteil 22 aufgenommen. Jedoch ist der sich in einer radialen Richtung am weitesten erstreckende Federbereich 21 weniger ausgedehnt als der für den Federbereich 21 vorgesehene Aufnahmebereich des Zwischenteils 22. Somit ist das Zwischenteil 22 in der genannten Richtung nach dem Aufstecken auf den Federbereich 21 und bei entferntem ersten Kupplungsteil 25 linear hin- und herbewegbar.

Erst bei vorhandenem Kupplungsteil 25, also ins Zwischenteil eingestecktem Kupplungsteil 25, ist das Zwischenteil 22 in allen Richtung begrenzt.

Eine Montage des Zwischenteils 22 in einer nicht vorgesehenen Weise ist durch die Laschenbereiche 52 verhindert. Denn beim Aufstecken des Zwischenteils 22 auf den Federbereich 21 blockieren die Laschenbereiche 52 eine Fehlmontage. Eine Verdrehung des Zwischenteils 22, insbesondere um 180°, bei der Montage ist verhindert durch die Laschenbereiche 52.

Die Laschenbereiche 52 sind an dem axialen Endbereich des Zwischenteils 22 angeordnet auf der der eintreibenden Welle 20 zugewandten Seite.

Die Laschenbereiche 52 sind eben ausgeführt. Die senkrechte Projektion der Klauenbereiche 30 in die Ebene der Laschenbereiche 52 überlappt dort mit den Laschenbereichen 52. Dies verhindert die Fehlmontage.

Die Laschenbereiche 52 verbinden jeweils den ersten Flügelbereich 50 mit dem unteren Flügelbereich 51. Außerdem sind die Laschenbereiche 52 zueinander parallel und in Flucht angeordnet. Jeder Laschenbereich 52 ist mit einem jeweiligen Wandbereich 54 verbunden, die jeweils eben ausgeführt ist senkrecht zum jeweiligen Laschenbereich 52 ausgerichtet ist, mit dem sie aber verbunden ist. Somit ist eine erhöhte Stabilität erreichbar.

Jede der beiden Wandbereiche 54 verbindet den ersten Flügelbereich 50 mit dem unteren Flügelbereich 51.

Der radiale Außenumfang jedes Flügelbereichs 51 weist einen außenzylindrischen Oberflächenbereich auf.

Im Federbereich 21 ist mittig zur Drehachse der eintreibenden Welle 20 ein Sackloch angeordnet.

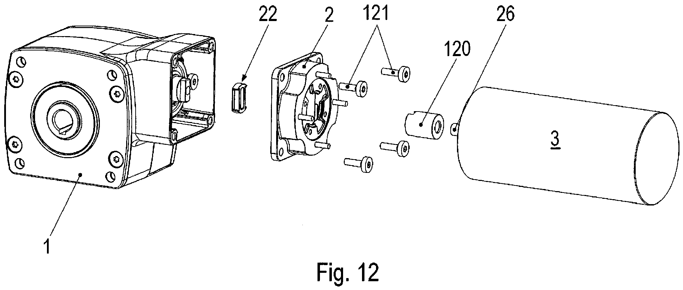

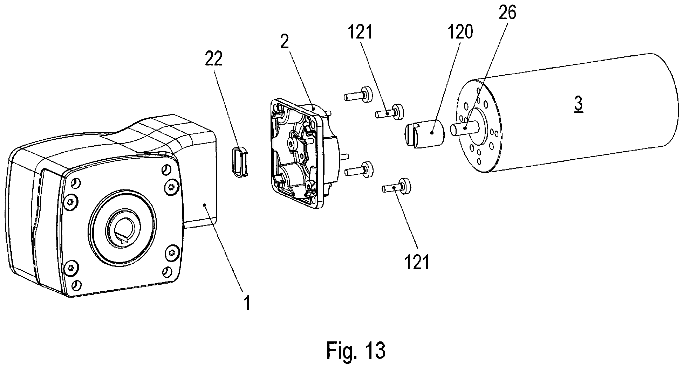

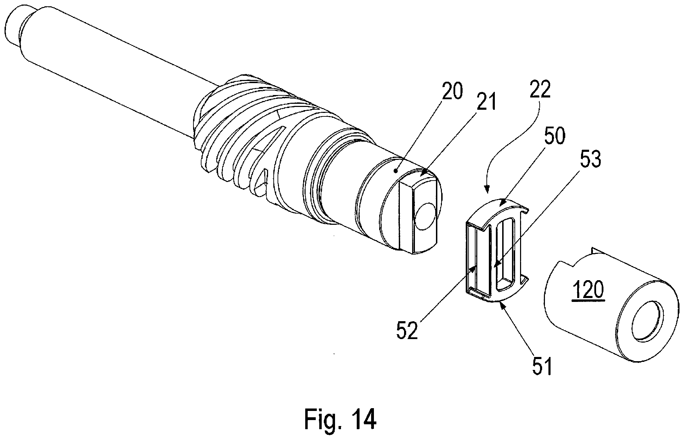

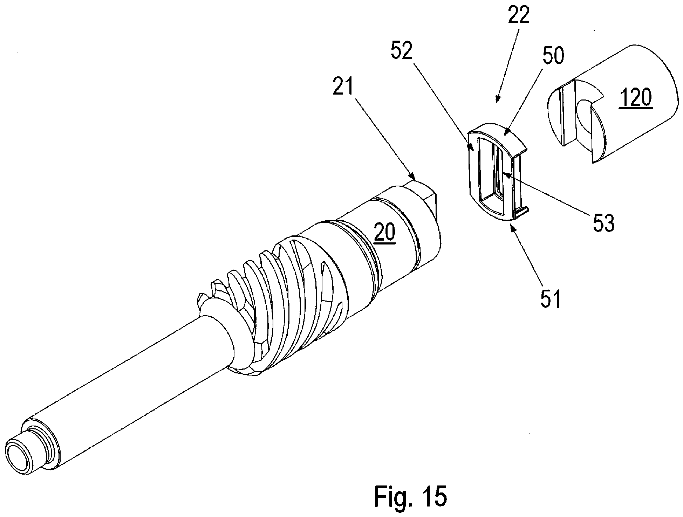

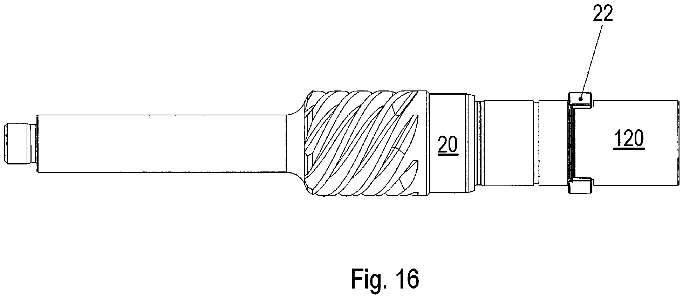

Wie in den Figuren 12 bis 16 dargestellt, ist dasselbe Getriebe mit derselben eintreibenden Welle 20 und dasselbe Zwischenteil 22 mit einem anderen Motor kombiniert, auf dessen Rotorwelle 26 statt des vorgenannten ersten Kupplungsteils 25 ein anders geformtes erstes Kupplungsteil 120 aufgesteckt ist.

Dieses erste Kupplungsteil 120 weist einen außenzylindrischen Umfang auf, wobei an seinem dem Getriebe zugewandten axialen Endbereich eine in einer radialen Richtung verlaufende Nut vorgesehen ist, in welche der Federbereich 21 der eintreibenden Welle 20 hineinragt, wobei das Zwischenteil 22 wiederum auf dem Federbereich 21 aufgesteckt und somit zwischen der eintreibenden Welle 20 und dem ersten Kupplungsteil 120 angeordnet ist.

Mittels der Nut am ersten Kupplungsteil 120 ist der mit dem Zwischenteil 22 in Berührung stehende Bereich des ersten Kupplungsteils 120 gleichgeformt wie bei dem ersten

Ausführungsbeispiel nach den Figuren 1 bis 11. Allerdings ist die Form der Klauenbereiche 30 des ersten Ausführungsbeispiels nun bei dem zweiten Ausführungsbeispiel durch die in das zylindrische erste Kupplungsteil 120 eingebrachte Nut erreicht.

Im Vergleich zum ersten Kupplungsteil 120 weist also das erste Kupplungsteil 25 einen Absatz auf, der am Ansatz der Klauenbereiche 30 angeordnet ist.

Bei weiteren erfindungsgemäßen Ausführungsbeispielen wird der Federbereich 21 in radialer Richtung weniger weit ausgeführt, so dass das Zwischenteil 22 verschiebbar ist. Bei anderen Ausführungsbeispielen wird der Federbereich derart ausgeführt, dass das Zwischenteil 22 spielfrei, in radialer Richtung nicht verschiebbar auf dem Federbereich 21 aufgesetzt ist.

### Bezugszeichenliste

1 Getriebegehäuse
2 Adaptergehäuse
3 Elektromotor
20 eintreibende Welle
21 Federbereich
22 Zwischenteil
23 Schraube
24 Schraube
25 Kupplungsteil
26 Rotorwelle
30 Klauenbereich
40 Laschenbereich
41 erste Bohrung
42 zweite Bohrung
43 dritte Bohrung
50 erster Flügelbereich
51 unterer Flügelbereich
52 Laschenbereich
53 Anschlagsbereich
54 Wandbereich
120 Kupplungsteil
121 Schraube

## Patentansprüche

1. Antrieb, aufweisend einen Elektromotor (3), ein Getriebe und ein zwischen Elektromotor (3) und Getriebe angeordnetes Adaptergehäuse (2),
wobei die Rotorwelle (26) des Elektromotors (3) mit einem ersten Kupplungsteil (25) verbunden ist, welches eine Nut aufweist, in welche ein Federbereich (21) einer eintreibenden Welle (20) des Getriebes hineinragt,
wobei zwischen dem ersten Kupplungsteil (25) und der eintreibenden Welle (20), insbesondere zwischen dem ersten Kupplungsteil (25) und dem Federbereich (21) der eintreibenden Welle (20), ein Zwischenteil (22) angeordnet ist,
wobei das Zwischenteil (22) stegförmige Anschlagsbereiche (53) aufweist, welche jeweils einen ersten Flügelbereich (50) und einen zweiten, insbesondere unteren, Flügelbereich (51) verbinden und an einem Nutboden der Nut anliegen,
**dadurch gekennzeichnet, dass**
**die Nut berandet ist von zwei Klauenbereichen (30) des ersten Kupplungsteils (25), wobei die Nut zwischen den beiden Klauenbereichen (30) angeordnet ist,**
**wobei das erste Kupplungsteil (25) zwischen den Klauenbereichen (30) und dem restlichen ersten Kupplungsteil (25) einen Wellenabsatz, insbesondere also einen Durchmessersprung, aufweist,**
**wobei ein erster Wandbereich mit dem ersten Flügelbereich (50) und dem zweiten Flügelbereich (51) verbunden ist,**
**wobei der erste Wandbereich eben ausgeführt ist und ein erster Anschlagsbereich (53) eben ausgeführt ist, wobei der Wandbereich senkrecht zum ersten Anschlagsbereich (53) ausgerichtet ist**
**wobei ein erster Laschenbereich (40) mit dem ersten Flügelbereich (50) und mit dem zweiten Flügelbereich (51) sowie mit dem ersten Wandbereich verbunden ist,**
**wobei der erste Laschenbereich (40) eben ausgeführt ist und parallel zum ersten Anschlagsbereich (53) eben ausgeführt ist.**

2. Antrieb nach Anspruch 1,
**dadurch gekennzeichnet, dass**
das Zwischenteil (22) aus einem weicheren Material als die eintreibende Welle (20) und als das erste Kupplungsteil (25) ausgeführt ist,
insbesondere wobei das Zwischenteil (22) aus Kunststoff und die eintreibende Welle (20) aus Metall, insbesondere Stahl, sowie das erste Kupplungsteil (25) aus Metall, insbesondere Stahl, ausgeführt ist.

3. Antrieb nach einem der vorangegangenen Ansprüche,
**dadurch gekennzeichnet, dass**
der Federbereich (21) in axialer Richtung an dem dem Motor zugewandten axialen Endbereich der eintreibenden Welle (20) hervorragt
und/oder dass
der Federbereich (21) sich einer zur Drehachse der eintreibenden Welle (20) senkrechten Richtung, insbesondere also in einer radialen Richtung, erstreckt.

4. Antrieb nach einem der vorangegangenen Ansprüche,
**dadurch gekennzeichnet, dass**
die Nut sich einer zur Drehachse der eintreibenden Welle (20) senkrechten Richtung, insbesondere also in einer radialen Richtung, erstreckt
und/oder dass
die Nut, insbesondere die Nutöffnung der Nut, zur eintreibenden Welle (20) hin geöffnet ist.

5. Antrieb nach einem der vorangegangenen Ansprüche,
**dadurch gekennzeichnet, dass**
die Nut in einen, insbesondere ansonsten, vollzylindrischen Fortsatz des ersten Kupplungsteils (25), insbesondere ansonsten ebenfalls hohlzylindrischen ersten Kupplungsteils (25), eingebracht ist
und/oder dass
die Nut in ein, insbesondere ansonsten, hohlzylindrisches erstes Kupplungsteil (25) eingebracht ist.

6. Antrieb nach einem der vorangegangenen Ansprüche,
**dadurch gekennzeichnet, dass**
**die Nut zwischen zwei Klauenbereichen (30) des ersten Kuppplungsteils angeordnet ist.**

7. Antrieb nach einem der vorangegangenen Ansprüche,
**dadurch gekennzeichnet, dass**
jeder der beiden Klauenbereiche (30) als Zylindersegment ausgeführt ist.

8. Antrieb nach einem der vorangegangenen Ansprüche,
**dadurch gekennzeichnet, dass**
das erste Kupplungsteil (25) kraftschlüssig, insbesondere thermisch aufgeschrumpft, mit der Rotorwelle (26) des Elektromotors (3) verbunden ist,
insbesondere wobei die Rotorwelle (26) in den axial durchgehenden Hohlraum des ersten Kupplungsteils (25) hineinragt.

9. Antrieb nach einem der vorangegangenen Ansprüche,
**dadurch gekennzeichnet, dass**
das Adaptergehäuse (2) in dem vom ersten Kupplungsteil (25) in axialer Richtung überdeckten Bereich nach radial innen hervorragende Laschenbereiche aufweist, welche jeweils zwei radial, insbesondere und in Umfangsrichtung, voneinander beabstandete, axial durch die Laschenbereich (40) durchgehende Bohrungen (41, 42, 43) aufweisen, insbesondere für durch die radial weiter innen oder radial weiter außen liegenden Bohrungen (41, 42, 43) hindurchreichenden Schrauben (23), deren jeweilige Gewindebereiche in jeweilige Gewindebohrungen des Elektromotors (3), insbesondere in Gewindebohrungen eines Lagerflansches des Elektromotors (3), eingeschraubt sind.

10. Antrieb nach einem der vorangegangenen Ansprüche,
**dadurch gekennzeichnet, dass**
das Adaptergehäuse (2) mittels in axial gerichtete, im Getriebe angeordnete Gewindebohrungen eingeschraubten Schrauben (121) ans Getriebe angeschraubt ist.

11. Antrieb nach einem der vorangegangenen Ansprüche,
**dadurch gekennzeichnet, dass**
**die Richtung der Normalen der den ersten Wandbereich aufnehmenden Ebene senkrecht zur Richtung der Normalen der den ersten Anschlagsbereich (53) aufnehmenden Ebene ausgerichtet ist.**

12. Antrieb nach einem der vorangegangenen Ansprüche,
**dadurch gekennzeichnet, dass**
ein zweiter Wandbereich mit dem ersten Flügelbereich (50) und dem zweiten Flügelbereich (51) verbunden ist,
wobei der zweite Wandbereich eben ausgeführt ist und ein zweiter Anschlagsbereich (53) eben ausgeführt ist, wobei der Wandbereich senkrecht zum zweiten Anschlagsbereich (53) ausgerichtete ist, insbesondere die Richtung der Normalen der den zweiten Wandbereich aufnehmenden Ebene senkrecht zur Richtung der Normalen der den zweiten Anschlagsbereich (53) aufnehmenden Ebene ausgerichtet ist.

13. Antrieb nach einem der vorangegangenen Ansprüche,
**dadurch gekennzeichnet, dass**
**ein zweiter Laschenbereich (40) mit dem ersten Flügelbereich (50) und mit dem zweiten Flügelbereich (51) sowie mit dem zweiten Wandbereich verbunden ist,**
**wobei der zweite Laschenbereich (40) eben ausgeführt ist und parallel zum ersten und/oder zweiten Anschlagsbereich (53) eben ausgeführt ist.**

14. Antrieb nach einem der vorangegangenen Ansprüche,
**dadurch gekennzeichnet, dass**
der Federbereich (21) der eintreibenden Welle (20) den ersten und zweiten Anschlagsbereich (53) auf dessen von dem Elektromotor (3) abgewandter Seite berührt und das erste Kupplungsteil (25), insbesondere der Nutboden der Nut, den ersten und zweiten Anschlagsbereich (53) auf der vom Federbereich (21) abgewandten Seite des Anschlagsbereichs (53).

15. Antrieb nach einem der vorangegangenen Ansprüche,
**dadurch gekennzeichnet, dass**
das Zwischenteil (22) in der Richtung der größten Ausdehnung des Federbereichs (21) länger als der Federbereich (21) ausgeführt ist, insbesondere so, dass das Zwischenteil (22) bei entferntem erstem Kupplungsteil (25) relativ zum Federbereich (21) hin- und herbewegbar ist.

16. Antrieb nach einem der vorangegangenen Ansprüche,
**dadurch gekennzeichnet, dass**
der erste Laschenbereich (40) an einer axialen Stirnseite der eintreibenden Welle (20) anliegt, insbesondere spielbehaftet angrenzt.

## Claims

1. A drive, having an electric motor (3), a gear unit, and an adapter housing (2) arranged between the electric motor (3) and gear unit,
wherein the rotor shaft (26) of the electric motor (3) is connected to a first coupling part (25) which has a groove into which a spring region (21) of an input shaft (20) of the gear unit protrudes,
wherein an intermediate part (22) is arranged between the first coupling part (25) and the input shaft (20), in particular between the first coupling part (25) and the spring region (21) of the input shaft (20),
wherein the intermediate part (22) has crosspiece-shaped stop regions (53) which connect in each case a first wing region (50) and a second, in particular lower, wing region (51) and bear against a groove base of the groove,
**characterised in that**
the groove is delimited by two claw regions (30) of the first coupling part (25), with the groove being arranged between the two claw regions (30),
with the first coupling part (25) having a shaft shoulder, in particular therefore a step in diameter, between the claw regions (30) and the rest of the first coupling part (25),
with a first wall region being connected to the first wing region (50) and the second wing region (51),
with the first wall region being made flat and a first stop region (53) being made flat, with the wall region being oriented perpendicularly to the first stop region (53),
with a first tab region (40) being connected to the first wing region (50) and to the second wing region (51) and also to the first wall region,
with the first tab region (40) being made flat and being made flat parallel to the first stop region (53).

2. A drive according to claim 1,
**characterised in that**
the intermediate part (22) is made from a softer material than the input shaft (20) and than the first coupling part (25),
in particular with the intermediate part (22) being made of plastics material and the input shaft (20) of metal, in particular steel, and also the first coupling part (25) of metal, in particular steel.

3. A drive according to one of the preceding claims,
**characterised in that**
the spring region (21) protrudes in the axial direction from that axial end region of the input shaft (20) which faces the motor
and/or **in that**
the spring region (21) extends [in] a direction perpendicular to the axis of rotation of the input shaft (20), in particular therefore in a radial direction.

4. A drive according to one of the preceding claims,
**characterised in that**
the groove extends [in] a direction perpendicular to the axis of rotation of the input shaft (20), in particular therefore in a radial direction
and/or **in that**
the groove, in particular the groove opening of the groove, is opened towards the input shaft (20).

5. A drive according to one of the preceding claims,
**characterised in that**
the groove is formed in an, in particular otherwise, fully cylindrical extension of the first coupling part (25), in particular otherwise likewise hollow-cylindrical first coupling part (25),
and/or **in that**
the groove is formed in an, in particular otherwise, hollow-cylindrical first coupling part (25).

6. A drive according to one of the preceding claims,
**characterised in that**
the groove is arranged between two claw regions (30) of the first coupling part.

7. A drive according to one of the preceding claims,
**characterised in that**
each of the two claw regions (30) is formed as a segment of a cylinder.

8. A drive according to one of the preceding claims,
**characterised in that**
the first coupling part (25) is connected in a force-fit, in particular thermally shrunk on, to the rotor shaft (26) of the electric motor (3),
in particular with the rotor shaft (26) protruding into the axially uninterrupted cavity of the first coupling part (25).

9. A drive according to one of the preceding claims,
**characterised in that**
the adapter housing (2), in the region covered in the axial direction by the first coupling part (25), has tab regions protruding radially inwards which each have two bores (41, 42, 43) which are spaced apart from each other radially, in particular and in the circumferential direction, and which pass axially through the tab region (40), such bores being in particular for screws (23) which extend through the bores (41, 42, 43) located radially farther to the inside or radially farther to the outside, the respective threaded regions of which screws are screwed into respective threaded bores in the electric motor (3), in particular into threaded bores in a bearing flange of the electric motor (3).

10. A drive according to one of the preceding claims,
**characterised in that**
the adapter housing (2) is screwed onto the gear unit by means of screws (121) screwed into axially directed threaded bores arranged in the gear unit.

11. A drive according to one of the preceding claims,
**characterised in that**
the direction of the normals of the plane which accommodates the first wall region is oriented perpendicularly to the direction of the normals of the plane which accommodates the first stop region (53).

12. A drive according to one of the preceding claims,
**characterised in that**
a second wall region is connected to the first wing region (50) and the second wing region (51),
with the second wall region being made flat and a second stop region (53) being made flat,
with the wall region being oriented perpendicularly to the second stop region (53), in particular the direction of the normals of the plane which accommodates the second wall region being oriented perpendicularly to the direction of the normals of the plane which accommodates the second stop region (53).

13. A drive according to one of the preceding claims,
**characterised in that**
a second tab region (40) is connected to the first wing region (50) and to the second wing region (51) and also to the second wall region,
with the second tab region (40) being made flat and being made flat parallel to the first and/or second stop region (53).

14. A drive according to one of the preceding claims,
**characterised in that**
the spring region (21) of the input shaft (20) contacts the first and second stop regions (53) on its side which faces away from the electric motor (3), and the first coupling part (25), in particular the groove base of the groove, contacts the first and second stop regions (53) on that side of the stop region (53) which faces away from the spring region (21).

15. A drive according to one of the preceding claims,
**characterised in that**
the intermediate part (22) in the direction of the greatest extent of the spring region (21) is made longer than the spring region (21), in particular such that the intermediate part (22) can be moved back and forth relative to the spring region (21) when the first coupling part (25) is removed.

16. A drive according to one of the preceding claims,
**characterised in that**
the first tab region (40) bears against an axial end face of the input shaft (20), in particular adjoins it with play.

## Revendications

1. Entraînement, comprenant un moteur électrique (3), une transmission et un carter d'adaptateur (2) agencé entre le moteur électrique (3) et la transmission,
l'arbre de rotor (26) du moteur électrique (3) étant relié à une première partie d'accouplement (25) qui présente une rainure dans laquelle pénètre une région de ressort (21) d'un arbre d'entraînement (20) de la transmission,
une partie intermédiaire (22) étant agencée entre la première partie d'accouplement (25) et l'arbre d'entraînement (20), en particulier entre la première partie d'accouplement (25) et la région de ressort (21) de l'arbre d'entraînement (20), la partie intermédiaire (22) présentant des régions de butée (53) en forme de barrette qui relient respectivement une première région de flanc (50) et une seconde région de flanc (51), en particulier inférieure, et qui reposent contre un fond de rainure de la rainure,
**caractérisé en ce que**
la rainure est bordée par deux régions de griffe (30) de la première partie d'accouplement (25), la rainure étant agencée entre les deux régions de griffe (30),
la première partie d'accouplement (25) présentant un épaulement d'arbre, en particulier un saut de diamètre, entre les régions formant griffe (30) et la première partie d'accouplement (25) restante,
une première région de paroi étant reliée à la première région de flanc (50) et à la seconde région de flanc (51),
la première région de paroi étant réalisée de manière plane et une première région de butée (53) étant réalisée de manière plane, la région de paroi étant orientée perpendiculairement à la première région de butée (53)
une première région de patte (40) étant reliée à la première région de flanc (50) et à la seconde région de flanc (51) ainsi qu'à la première région de paroi,
la première région de patte (40) étant réalisée de manière plane et étant réalisée de manière plane parallèlement à la première région de butée (53).

2. Entraînement selon la revendication 1,
**caractérisé en ce que**
la partie intermédiaire (22) est réalisé en un matériau plus tendre que celui de l'arbre d'entrainement (20) et que celui de la première partie d'accouplement (25).
la partie intermédiaire (22) étant en particulier réalisée en plastique et l'arbre d'entraînement (20) étant réalisé en métal, en particulier en acier, et la première partie d'accouplement (25) étant réalisée en métal, en particulier en acier.

3. Entraînement selon l'une quelconque des revendications précédentes,
**caractérisé en ce que**
la région de ressort (21) fait saillie dans la direction axiale au niveau de la région d'extrémité axiale de l'arbre d'entraînement (20) tournée vers le moteur
et/ou **en ce que**
la région de ressort (21) s'étend dans une direction perpendiculaire à l'axe de rotation de l'arbre d'entraînement (20), en particulier dans une direction radiale.

4. Entraînement selon l'une quelconque des revendications précédentes,
**caractérisé en ce que**
la rainure s'étend dans une direction perpendiculaire à l'axe de rotation de l'arbre d'entraînement (20), en particulier dans une direction radiale
et/ou **en ce que**
la rainure, en particulier l'ouverture de la rainure, est ouverte vers l'arbre d'entraînement (20).

5. Entraînement selon l'une quelconque des revendications précédentes,
**caractérisé en ce que**
la rainure est ménagée dans un prolongement, en particulier notamment cylindrique creux, de la première partie d'accouplement (25), en particulier de la première partie d'accouplement (25) cylindrique creuse
et/ou **en ce que**
la rainure est ménagée dans une première partie d'accouplement (25) en particulier notamment cylindrique creuse.

6. Entraînement selon l'une quelconque des revendications précédentes,
**caractérisé en ce que**
la rainure est agencée entre deux régions de griffe (30) de la première partie d'accouplement.

7. Entraînement selon l'une quelconque des revendications précédentes,
**caractérisé en ce que**
chacune des deux régions de griffe (30) est réalisée sous la forme d'un segment de cylindre.

8. Entraînement selon l'une quelconque des revendications précédentes,
**caractérisé en ce que**
la première partie d'accouplement (25) est reliée avec verrouillage par complémentarité de force, en particulier par thermorétraction, à l'arbre de rotor (26) du moteur électrique (3),
l'arbre de rotor (26) faisant en particulier saillie dans la cavité axialement traversante de la première partie d'accouplement (25).

9. Entraînement selon l'une quelconque des revendications précédentes,
**caractérisé en ce que**
le carter d'adaptateur (2) présente, dans la région recouverte dans la direction axiale par la première partie d'accouplement (25), des régions de patte faisant saillie radialement vers l'intérieur qui présentent respectivement deux alésages (41, 42, 43) radialement espacés l'un de l'autre, en particulier dans la direction circonférentielle, et traversant axialement la région de patte (40), en particulier pour des vis (23) traversant les alésages (41, 42, 43), situés radialement plus à l'intérieur ou radialement plus à l'extérieur, et dont les régions filetées respectives sont vissées dans les alésages filetés respectifs du moteur électrique (3), en particulier dans les alésages filetés d'une bride de palier du moteur électrique (3).

10. Entraînement selon l'une quelconque des revendications précédentes,
**caractérisé en ce que**
le carter d'adaptateur (2) est vissé sur la transmission au moyen de vis (121) vissées dans des alésages filetés orientés axialement et agencés dans la transmission.

11. Entraînement selon l'une quelconque des revendications précédentes,
**caractérisé en ce que**
la direction de la normale du plan contenant la première région de paroi est orientée perpendiculairement à la direction de la normale du plan contenant la première région de butée (53).

12. Entraînement selon l'une quelconque des revendications précédentes,
**caractérisé en ce que**
une seconde région de paroi est reliée à la première région de flanc (50) et à la seconde région de flanc (51),
la seconde région de paroi étant réalisée de manière plane et une seconde région de butée (53) étant réalisée de manière plane, la région de paroi étant orientée perpendiculairement à la seconde région de butée (53), en particulier la direction de la normale du plan contenant la seconde région de paroi étant orientée perpendiculairement à la direction de la normale du plan contenant la seconde région de butée (53).

13. Entraînement selon l'une quelconque des revendications précédentes,
**caractérisé en ce que**
une seconde région de patte (40) est reliée à la première région de flanc (50) et à la seconde région de flanc (51) ainsi qu'à la seconde région de paroi,
la seconde région de patte (40) étant réalisée de manière plane et étant réalisée de manière plane parallèlement à la première et/ou à la seconde région de butée (53).

14. Entraînement selon l'une quelconque des revendications précédentes, **caractérisé en ce que**
la région de ressort (21) de l'arbre d'entraînement (20) touche les première et seconde régions de butée (53) sur son côté opposé au moteur électrique (3) et la première partie d'accouplement (25), en particulier le fond de la rainure, touche les première et seconde régions de butée (53) sur le côté de la région de butée (53) opposé à la région de ressort (21).

15. Entraînement selon l'une quelconque des revendications précédentes,
**caractérisé en ce que**
la partie intermédiaire (22) est réalisée plus longue dans la direction de la plus grande extension de la région de ressort (21) que ne l'est la région de ressort (21), en particulier de sorte que la partie intermédiaire (22) peut être déplacée en va-et-vient par rapport à la région de ressort (21) lorsque la première partie d'accouplement (25) est éloignée.

16. Entraînement selon l'une quelconque des revendications précédentes,
**caractérisé en ce que**
la première région de patte (40) est adjacente à une face avant axiale de l'arbre d'entraînement (20), en particulier de manière à présenter un jeu.
